# EUROPEAN PATENT SPECIFICATION

(11) **EP 4 327 182 B1**
(45) Date of publication and mention of the grant of the patent: **03.06.2026**
(21) Application number: 21721069.9
(22) Date of filing: 22.04.2021
(51) Int. Cl.: G06F 3/01, G06F 3/044, G06F 3/0354, G06F 3/04883, G06F 3/0362, B60K 35/21, B60K 35/25, G06F 3/04847, B60K 35/10

(54) **HAPTICAL FEEDBACK BASED ON ELECTRO-ADHESION ON A 3-DIMENSIONAL SURFACE OF A USER CONTROL**
HAPTISCHE RÜCKKOPPLUNG AUF BASIS VON ELEKTROADHÄSION AUF EINER DREIDIMENSIONALEN OBERFLÄCHE EINER BENUTZERSTEUERUNG
RETOUR HAPTIQUE FONDÉ SUR L'ÉLECTRO-ADHÉSION SUR UNE SURFACE TRIDIMENSIONNELLE D'UN DISPOSITIF DE CONTRÔLE UTILISATEUR

(43) Date of publication of application: 28.02.2024
(73) Proprietor: Harman Becker Automotive Systems GmbH, 76307 Karlsbad (DE)
(72) Inventor: WELKE, Joerg, 76275 Ettlingen-Schöllbronn (DE); BRANDT, Peter, 76327 Pfinztal (DE); BAYER, Marcel, 76751 Jockgrim (DE)
(74) Representative: Kraus & Lederer PartGmbB
(86) International application number: PCT/EP2021/060554
(87) International publication number: WO 2022/223120

(56) References cited:
- JP-A- 2018 109 982
- US-A1- 2011 240 455
- US-A1- 2016 364 059

## Description

### Technical Field

Various examples generally relate to user controls with haptic feedback, in other words Human-Machine-Interfaces (HMI), and specifically to user controls with haptic feedback on a 3-dimensional touch surface based on electro-adhesion. Further, a corresponding method for contacting a user control with haptic feedback, a control panel and a vehicle comprising at least one control according to the disclosure are provided.

### Background

Electronic systems such as vehicle systems, climate control systems, or audio systems may be controlled by users using knobs or buttons that are specifically mechanically actuated to control the electronic system. Conventional control panels may also comprise touch screen interface for receiving user touch input. For example, in current systems with contextural knobs, a mechanical detent is used for haptic feedback based on the user input. These detents are positioned at predetermined positions based on the mechanical design. For the measurement of the knob position a digital decoder is needed. The disadvantages of such systems are the high system costs, the mechanical dimensions, and the reduced usability due to the fixed detent configuration.

From US 2016/0364059 A1 a user interface is known, in which a user virtually rotates a fixed cylindrical touch sleeve to adjust a setting, while a central haptic vibrator provides vibration feedback to the user.

Therefore, the objective of the presented approach is to provide an advanced user control with haptic feedback and a method for contacting such a user control, which overcome or mitigate at least some the above-identified limitations and drawbacks.

### Summary

This object is solved by the subject matter of the appended independent claims. Further advantageous features are subject matter of the dependent claims.

The solution according to the disclosure is described with respect to the claimed user controls as well as with respect to the claimed methods for providing and/or manufacturing a user control with haptic feedback, i.e., electrically and/or mechanically contacting a user control with haptic feedback. Features, advantages, or alternative embodiments herein may be assigned to the other claimed objects, and vice versa. In other words, claims for the methods of contacting a user control may be improved with features described or claimed in the context of the user controls, and the claims for the user controls may be improved with features described or claimed in the context of the methods.

A user control, or user interface (HMI), may be an element touched by a user and used for providing user input to an electronic system. Haptic feedback is provided on a 3-dimensional touch surface of the control and may for example correspond to haptic characteristics of the control, which may be experienced by the user when touching the control. Haptic such feedback may be statical or dynamically changeable in reaction to a context of the control or to user input. The control includes a 3-dimensional touch surface to be touched by a user with an electrode structure arranged at least partly on it. The electrode structure is configured to provide haptic feedback to the user based on electro-adhesion between the user and the control, i.e., based on electro-static forces between the user and the control at the contact surface induced by electric charges in the electrode structure, in other words based on electro-statically varied friction between the user and the 3-dimensional touch surface.

By the techniques according to the disclosure, no kinematic parts are necessary for a control, such that aging from mechanically activating the parts may be avoided, wherein the lifetime of the control may be increased. Further the number of parts which are needed for a control is reduced, such that the production costs are lower. As a further advantage, the haptic feedback on the touch surface may be freely programmable, depending on the context of the control and the user input. In the example of a contextural knob, the advantages of the disclosure are the programmable detents depending on the UX context. The electro adhesion system is noiseless, which may lead to an improved user experience and silent environments. Further, no encoders are needed for detecting the mechanical position of the control, wherein the mechanical installation space may be minimised.

In various examples, an additional sensor structure may be arranged at the control, for example at least partly on the 3-dimensional touch surface, which may be used to detect the position of the user context with regard to the control, and in such a way detect user input to the control, wherein haptic feedback may be based on the detected user input.

The control further comprises a contacting surface. The electrode structure is contacted on the contacting surface, which may be an area connected to the touch surface along an outer contour of the touch surface, for example along at least 25 percent, 50 percent 75 percent or 100 percent of the entire outline of the touch surface. The electrode structure extends from the touch surface onto the contacting surface, wherein on the contacting surface it may have open contacts. In such a way, the contacting surface may provide enough space for a high number of electrically contacts and a fine grid, i.e., a high density, of electrodes may be provided by the electrode structure on the touch surface. The contacting surface may substantially be a plane surface, or a surface with a light curvature, such that a flexible connector, for example a flexible printed circuit may adapt to the contacting surface.

In various examples, the control may be a knob, such as a contextural knob, wherein a top surface, which may be facing the user, opposite to a base/ground plane of the control may comprise a display used for displaying contextural information to the user. The 3-dimensional touch surface may be a cylindrical side surface, or a half-conical side surface, wherein a user may touch the cylindrical side surface and rotates the fingers around the cylindrical surface to provide touch input. Therein, a rotational center axis of the cylindrical side surface may correspond a rotational axis of the fingers of the user around the knob. Also, the user may slide the fingers for example from top to down, i.e., from the top surface to the ground plane of the knob.

Haptic feedback may be freely programmable, in order to provide haptic feedback in any direction of the touch surface. In such an example, the contacting surface may be a ring-shaped surface at the bottom of the knob, wherein it may lie in a plane substantially perpendicular to the touch surface, fully surrounding the touch surface, such as a hat brim.

The electrode structure extends from the cylindrical surface onto the contacting surface, where it is electrically contacted by arranging an anisotropic conductive film layer on the electrode structure on the contact surface, and by further arranging a flexible printed circuit, or a thin PCB, on the anisotropic conductive film layer. It is to be understood, that the materials used in the stack may be varied based on a specific application of the control.

The flexible printed circuit may further comprise a Chip-on-Foil electrically connected between at least part of the contacts to the electrode structure and an output end of the connector which may be connected to the electrical system.

A method for providing or contacting a user control comprises the following steps. In a step, a user control is provided, which comprises a 3-dimensional touch surface with an electrode structure arranged on it. In another step, an electronically conductive interface layer, such as an Anisotrop Conducting Film (ACF) Layer is arranged on at least part of the electrode structure. In another step, a connector, which comprises a plurality of conductive paths are lines, such as a printed circuit board (PCB) or a flexible printed circuit (FPC), is arranged on the electronically conductive interface layer. The electrode structure may extend onto a contacting surface, which is not used for a user to touch it, and which may lie in a plane, e.g., substantially perpendicular to the touch surface and/or parallel to a main PCB in a control panel. In some embodiments, the contacting surface may also be curved.

An electronic device or system, a control panel and a vehicle comprise at least one user control according to the present disclosure.

For such a method, electronic device, control panel and vehicle, technical effects may be achieved, which correspond to the technical effects described for the control.

It is to be understood that the features mentioned above and features yet to be explained below can be used not only in the respective combinations indicated, but also in other combinations or in isolation, without departing from the scope of the present disclosure. Features of the above-mentioned aspects and embodiments may be combined with each other in other embodiments.

Therefore, the above summary is merely intended to give a short overview over some features of some embodiments and implementations and is not to be construed as limiting. Other embodiments may comprise other features than the ones explained above.

### Brief description of the drawings

The foregoing and additional features and advantages of the disclosure will become apparent from the following detailed description when read in conjunction with the accompanying drawings, in which like reference numerals refer to like elements.
- Fig. 1: schematically illustrates a 3-dimensional user control with haptic feedback on a side surface, according to embodiments of the disclosure;
- Fig. 2: schematically illustrates a side view of the control of Fig. 1, according to embodiments of the disclosure;
- Fig. 3: schematically illustrates the electrical contacting of the user control, according to embodiments of the disclosure;
- Fig. 4: schematically illustrates a flexible printed connector, according to embodiments of the disclosure;
- Fig. 5: schematically illustrates a cross-sectional view of the electrical contacting of the user control, according to embodiments of the disclosure; and
- Fig. 6: schematically illustrates a method for electrically contacting a user control, according to embodiments of the disclosure.

### Detailed description

The above and other elements, features, steps, and concepts of the present disclosure will be more apparent from the following detailed description in accordance with exemplary embodiments of the disclosure, which will be explained with reference to the accompanying drawings.

Although this disclosure describes and illustrates a particular control with a particular number of particular surfaces with particular shapes and sizes, it to be understood that any suitable device with any suitable number of any suitable surfaces with any suitable shapes and any suitable sizes may be used to implement the disclosed techniques.

The drawings are to be regarded as being schematic representations, and elements illustrated in the drawings are not necessarily shown to scale. Rather, the various elements are represented such that their function and general purpose become apparent to a person skilled in the art. While user controls of embodiments may be Human-Machine-Interfaces in an automotive environment, specifically in a vehicle, or may be handheld communication devices, or devices having a touch input display operated by a user, the user control is not limited to being used in such devices.

In the following, detailed descriptions for an improved user control with haptic feedback on a 3-dimensional surface, and a method for contacting an improved user control haptic feedback, in accordance with aspects and embodiments of the disclosure, will be explained.

The following a contextural knob with haptic feedback based on electro adhesion is described. An electrode structure is placed around a cylindrical surface of a contextural knob. In some embodiments, the electrode structure may further have the function of an electronic sensor structure, for detecting user input. The wiring of this structure has to be electrically connected with the main PCB of the electronic system. The difficulty is the high number of connections on limited space of the cylindrical knob geometry. The touch surface has a perpendicular position to the main PCB.

Various examples show a control in form of a round contextural knob with cylindrical side surface, however, is to be understood that the described techniques may be applied to any control in arbitrary shape, including 3-dimensional touch surfaces of any shape.

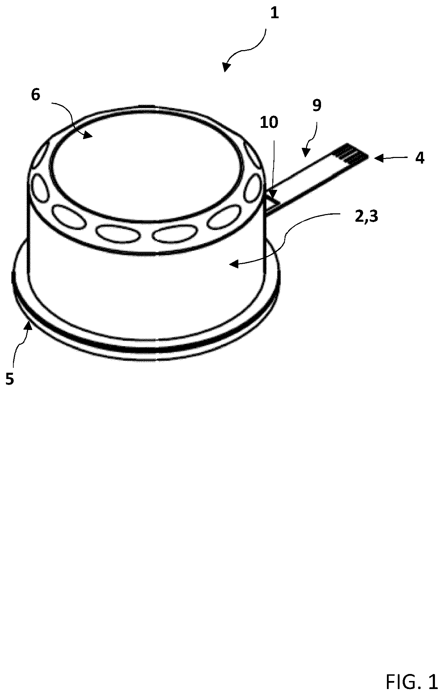

Fig. 1 schematically illustrates a 3-dimensional user control 1 with haptic feedback on a 3-dimensional side touch surface 2, according to embodiments of the disclosure.

The user control 1 in form of a knob substantially has an outer dimension of a cylinder. The cylindrical side surface corresponds to the 3-dimensional touch surface 2, on which the haptic feedback is provided. On the cylindrical side surface an electrode structure 3 is applied, with which the electrostatic adhesion for the haptic feedback is generated.

On a lower side, or ground/base plane, of the control 1, a contacting surface 5 is located. The contacting surface 5 substantially lies in the ground plane or parallel to the ground plane, wherein the 3-dimensional touch surface 2 with the electrode structure 3 are substantially perpendicular to the ground plane.

A ring-shaped flexible printed circuit (FPC) 9 comprising a chip-on-foil is arranged on the contacting surface 5 for electrically contacting the electrode structure 3, wherein an end 4 of the FPC is adapted to be electrically connected to an electronic system, to receive user input and provide haptic feedback.

Electro adhesion provides a haptic feedback by moving charges on the fingertips of the user. The electrode structure 3 of the control is placed on a 3-dimensional surface and can be used for the tracking of the finger movements and for the movements of the electrical charges in the fingertips. The electrode structure can be applied for example by screen printing of a silver paste and an isolation layer, however, is not limited to this technique. Any other technique for depositing a matrix or array of electrodes and covering it with a thin electrically isolating, touchable dielectric layer, as known in the art, may be implemented.

The control 1 may have display integrated into its top surface 6, for example such that it may be a contextural knob for controlling an electronic system in the vehicle. In an example, an OLED-Display may be located in the metal housing of the knob.

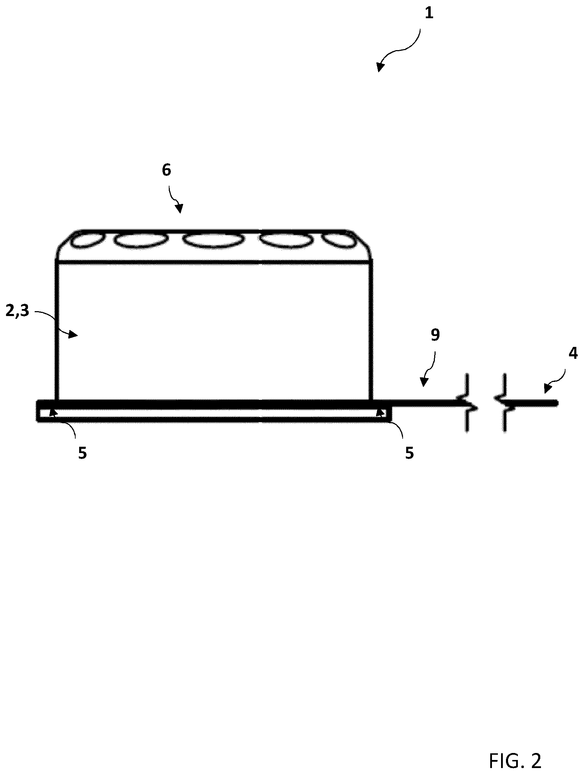

Fig. 2 schematically illustrates a side view of the control 1 of Fig. 1, according to embodiments of the disclosure.

As can be seen in Fig. 2, the ring-shaped FPC 9 is substantially aligned with the ring-shaped contacting surface 5 and extends around the cylindrical body of the control 1. The electrode structure 3 located on the cylindrical side surface to be touched by a user extends onto the contacting surface 5. By the ring form of the contacting surface 5 around the contextural knob and by extending the electrode structure onto the contacting surface 5, a sufficiently large contacting area may be created, such that a high number of electrical contacts may be realized and the haptic feedback, i.e., the electrode structure 3, may be implemented with a fine grid.

As further shown in Fig. 2, the control 1 may have a z-dimension perpendicular to the x-y-ground plane, in other words a height of the touch surface 2, which is at least 1mm, 2 mm, 5 mm, or 10 mm above the ground plane, such that when the control is mechanically fixed in a control panel, it protrudes above a ground plane and can be mechanically gripped and pressed by a user from all sides.

An important benefit of the control over touch displays is, that when extending from a ground plane in a z-direction, on the top surface a contextural display may be realized, wherein on the side touch surfaces a user may firmly grip the control and operate the control with haptic feedback without having to look at the control. By the disclosed electrical connection techniques, a free programmable haptic feedback may be provided on 3-dimensional surfaces of a contextural knob.

An electrical connection system for contextural knobs 1 with haptic feedback based on electro adhesion is described. The connection system allows the connection of a high number of contacts on a main PCB Board of the control or of a control panel with limited space.

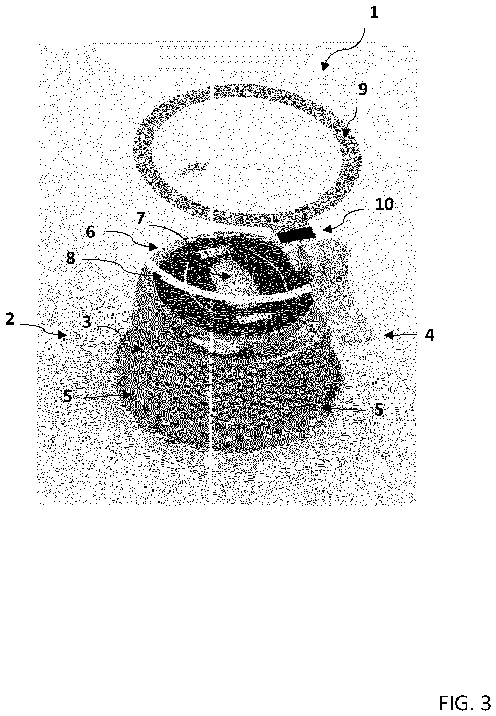

Fig. 3 schematically illustrates the electrical contacting of the user control 1, according to embodiments of the disclosure.

As shown in Fig. 3, a contextural knob 1 is formed as a cylindrically shaped metal knob 1 with a cylindrical side surface, which represents the 3-dimensional touch surface 2.

On the 3-dimensional touch surface 2, and electrode structure 3 is placed, which extends onto the ring-shaped flat contacting surface 5 on the lower side of the knob. On a top surface 6 of the knob, a display 7 is located for displaying contextural information to the user.

For contacting the electrode structure 3 on the contacting surface 5, an intermediate contacting layer 8 is placed, which can be formed by an anisotropic conductive film (ACF) layer. Onto the ACF layer 9, a flexible printed circuit board (FPC) 9 is placed, which has substantially a ring shape as the ACF layer and the contacting surface 5. A chip-on-foil is integrated in the FPC, in order to reuse the number of electrically contacts on the connecting end 4 of the FPC, which can be connected to an electrical system to be controlled using the knob.

By the disclosed techniques, a Human-Machine-Interface (HMI) is provided by a rotating movement with the user sliding over the electrode structure 3 on the cylindrical surface 2. Thereby, the knob is not rotating and is fixed mechanically. The feeling of rotation is just created to the user by electro adhesion. The knob haptic is freely programmable by software.

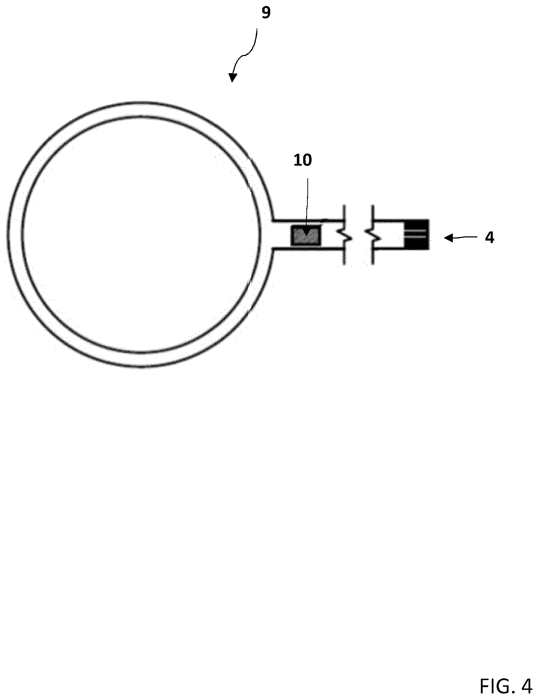

Fig. 4 schematically illustrates a flexible printed connector (FPC) 9, according to embodiments of the disclosure.

As can be seen in Fig. 4, the FPC has a ring formed region may be placed around the knob 1 onto the ACF layer and the contacting surface, a Chip-on-Foil 10, and a connecting end 4 to the electrical main system. It is to be understood, that all suitable forms of FPCs may be used in order to contact and electrode structure of a 3-dimensional touch surface.

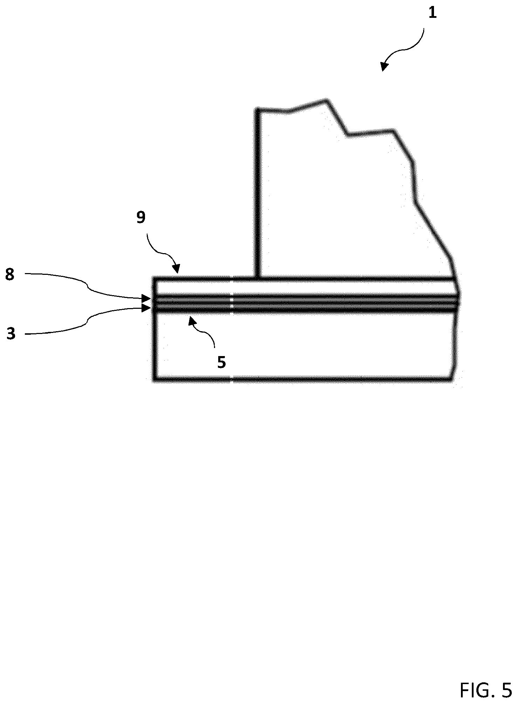

Fig. 5 schematically illustrates a cross-sectional view of the electrical contacting of the user control 1, according to embodiments of the disclosure.

An electrode structure 3, which may comprise an electrical sensor structure and a haptic feedback structure, is placed around a cylindrical surface 2 of a contextural knob 1. The wiring of this electrode structure 3 has to be electrically connected with the PCB of the control. The difficulty is the high number of connections on limited space of the cylindrical knob geometry, as the knob surface has a substantially perpendicular position to the PCB. In some embodiments, the touch surface may have an angle of greater 20°, 30°, 45° or 60° in relation to a base or ground plane and/or a main PCB.

A layered stack comprises the electrode structure 3, the anisotropic conductive film 8 and the flexible circuit board 9 on the contacting surface 5. The end of the cylindrical knob 1 towards the PCB is shaped in form of a hat brim and forms a contacting surface 5 for the electrode structure 3. The connection of the electrode structure 3 follows the surface of the modified cylinder. The circular protrusion provides an area which allows a contact surface 5 big enough to position the contacts with sufficient distance to increase the allowable production tolerances and reduce the manufacturing costs. A contacting flexible printed connector 9 in form of a loop is positioned opposed to the contacting surface and electrically connected with an anisotropic conductive foil 8 to the electrode structure 3.

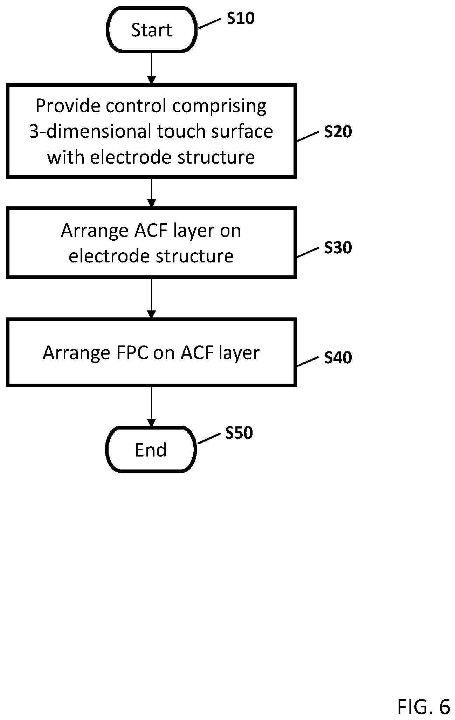

Fig. 6 schematically illustrates a method for electrically contacting a user control 1 with haptic feedback, according to embodiments of the disclosure.

The method starts in step S10. In step S20, a user control is provided comprising a 3-dimensional touch surface with an electrode structure 3 on it. In step S30, a conductive and/or adhesive layer, such as an anisotropic conductive film (ACF) layer is arranged on the electrode structure 3. In step S40, a flexible circuit board (FPC) is arranged on the ACF layer, thereby creating electrically contacts between the electrode structure 3 and the FPC. The method ends in step S50.

From the above said, some general conclusions may be drawn:
The disclosed techniques may be implemented for any conventionally mechanically movable user input elements, such as knobs that can be rotated and/or pushed and pulled, slide switches that are sled along a movement direction. Haptic feedback may be freely programmable for the user contact sliding along the respective touch surfaces, depending on a context of the control. For example, rasterization along a movement direction may be provided.

In various examples, a user control or user interface may correspond to a part or region of a control panel, that is used for controlling an electronical system by receiving user input and/or providing haptic feedback to a user. A control may be operated by a user, e.g., by touching and/or gripping the control and thereby interacting with the control to provide user input to the control, wherein the user input may be detected by one or more additional sensors of the control. A control may be mechanically fixed, for example to a base panel, such that it can not be actuated in relation to the base panel. A control may have a x-y-ground plane, which may be the lower side and may lie within the control panel when fixed and may have a z-dimension or height extending from the ground plane, such that the control has side walls higher than 1 mm, 2 mm, 5 mm, or 10 mm, which can be gripped by a user. In such a way, the control may have a flat top surface substantially elevated above the ground plane, wherein the touch surfaces for haptic feedback may comprise the side walls. However, controls are not limited to may also have a free-form 3-dimensional touch surface including the top surface.

In various examples, a control may have a haptically characteristic shape, for example an outer form such as a round knob a rectangular slide switch, or other forms like rectangular, triangular, cuboid, cone-shape cylindrical, or free-form outer surfaces and/or shapes which may be projecting from a control panel surface, such that they may be touched or gripped by a user. In that way, they may be haptically differentiated from other controls. The control may be touched or gripped by a user using his hand, wherein the position of the user's hand on the control may provide user input to the electronical system. Touch surfaces, which may receive user touch input and provide haptic feedback, may be side surfaces, e.g., surfaces substantially perpendicular to a top surface, of such controls. A top surface may be formed of or may comprise a display, such as an LCD or OLED display, in order to provide contextural information about the control to the user.

For example, a 3-dimensional touch surface may correspond to a 3-dimensional surface of the control which may be touched by a user, in order to provide input to the electronic system. Such surfaces may be knobs, buttons, or any other shape, that can be touched or gripped by a user. Such user controls may be implemented in the form of a mechanically protruding feature from a flat control panel surface, wherein the user control may have at least one 3-dimensional surface that is at least partly touched by a user to provide input. By the electrode structure, during any time of the user touching the control, the control may provide dynamically changing feedback based on the user input, or static haptic feedback to the user, based on electro-adhesion. The control may protrude from a control panel more than 1 mm, 2 mm, 5 mm, or 10 mm, wherein the outer contour, which comprises the touch surface, may be elevated over a ground panel or plane, such that the user can easily grip the control.

In various examples, the 3-dimensional touch surface according to the present disclosure may be different from a conventional touch display in that the touch surfaces do not include a display, wherein the carrier material may be made from an opaque material, such as metal or plastic. For example, the carrier material may be injection moulded, or integrally formed in the control panel. For example, the control may be mechanically fixed in relation to the control panel or the base system, such that it is not moved by the user.

In various examples, such a control may have at least one closed, i.e., ring shaped, cylindrical or free-form outer touch surface, and/or free-form curved touch surface with two touch surface regions, and/or two separate touch surfaces which may be substantially opposite to each other, wherein the user can embrace or grip the control. In such a way it can be embraced or pressed by the user with substantially opposite mechanical forces greater than for example 1 N, 2 N, or 5 N, such that the user's hand may be fixed to the control while operating the control. A part of the control may be mechanically adapted to rest a finger of the user, and/or other touch surfaces may be adapted to the user's hand anatomy such that one or more fingers may slide along the touch surface, in other examples all user contacts to the control may slide, e.g., around a rotational axis or along a translational axis of the control.

In various examples a contextural knob may include a cylindrically shaped outer touch surface and a flat or curved top surface including a display used to display to the user context, in which the knob may be currently operated to receive user input. The contextural knob may have a rotational axis through the center and substantially perpendicular to a control surface and/or pointing in a direction towards the user. By replacing a mechanically rotated knob with a mechanically fixed knob, on which user's finger rotationally slide on the cylindrical surface and receive haptic feedback, particularly space is saved, i.e., the outline and dimension of the control may remain the same and the input mode may not noticeably be changed for the user.

Due to the characteristic protruding form of the control and haptic feedback on the touched surfaces, the described 3-dimensional control surfaces with haptic feedback may be advantageous for controlling an electronic system even while driving a vehicle, compared to touch screens.

Haptic feedback may be effected by electrostatic forces between the user and the electrode structure on the touch surface, which is also known as electro-adhesion. In such a way, the haptic experience from the user touching the 3-dimensional structure and haptic feedback by increasing the friction between the user and the 3-dimensional structure may be combined. Further, dynamically changing haptic feedback may be used to the user, while touching and not moving in relation to the control.

Haptic feedback may be provided by electro adhesion only, wherein the control may not be movable in relation to a control panel or in relation to the electrical system. In various examples the control may also be non-movable in relation to the user touching the control, i.e., it may be mechanically fixed not to be vibrated during haptic feedback.

Summarizing, an improved user control is provided by providing haptic feedback based on electro-adhesion on a 3-dimensionally free-form surface of a user control, such as a contextural knob. Freely programmable haptic feedback may be provided on touch surfaces of control elements without mechanically moving the control, effecting longer lifetime and lower production costs.

## Claims

1. A user control (1) for an electrical system, comprising:
- a 3-dimensional touch surface (2) to be touched by a user to provide user input;
- an electrode structure (3) arranged at least partly on the 3-dimensional touch surface (2), wherein the electrode structure (3) is configured to provide haptic feedback to the user;
- a contacting surface (5) for the electrode structure (3), which is arranged at least partly along a side of the 3-dimensional touch surface (2), wherein the electrode structure (3) extends onto the contacting surface (5);
- an anisotropic conductive film, ACF, layer (8) arranged onto the electrode structure (3) on the contact surface (5); and
- a flexible printed circuit (9), FPC, arranged onto the ACF layer (8).

2. The user control (1) according to claim 1, wherein the haptic feedback is effected by electro-static forces between the user and the electrode structure (3).

3. The user control (1) according to one of the preceding claims, wherein an additional sensor structure is arranged at the control (1) to detect the user input, and wherein the haptic feedback is based at least partly on the detected user input.

4. The user control according to claim 3, wherein the additional sensor structure is arranged at least partly on the 3-dimensional touch surface (2).

5. The user control (1) according to one of the preceding claims, wherein the contacting surface (5) is arranged in an angle greater than 45°.

6. The user control (1) according to claim 5, wherein the contacting surface (5) extends along at least 75% of an outer edge of the 3-dimensional touch surface (2).

7. The user control (1) according to claim 5 or 6, wherein the contacting surface (5) substantially lies in a plane.

8. The user control (1) according to one of the preceding claims, wherein the user control (1) is a contextural knob with a side surface higher than 1 mm, wherein a top surface (6) of the contextural knob comprises a display (7).

9. The user control (1) according to claim 8, wherein the 3-dimensional touch surface (2) is a cylindrical surface, and the contacting surface (5) is a closed ring-shaped plane surface around the 3-dimensional touch surface (2) and is substantially perpendicular to the 3-dimensional touch surface (2).

10. The user control (1) according to one of claims 5 to 9, wherein the electrode structure (3) is electrically contacted by the anisotropic conductive film, ACF, layer (8) and the flexible printed circuit (9), FPC.

11. The user control (1) according to one of the preceding claims, wherein the flexible printed circuit (9) further comprises a chip-on-foil (10) electrically arranged between at least part of contacts to the electrode structure (3) and an output end (4) of the flexible printed circuit (9).

12. The user control (1) according to one of the preceding claims, wherein the 3-dimensional touch surface (2) is non-moveable in relation to the user and can not be actuated by the user.

13. Method for electrically contacting a user control (1) with haptic feedback, comprising:
- providing a user control comprising a 3-dimensional touch surface (2) to be touched by a user to provide user input, wherein an electrode structure (3) is arranged at least partly on the 3-dimensional touch surface (2), wherein the electrode structure (3) is configured to provide haptic feedback to the user, wherein the control (1) further comprises a contacting surface (5) for the electrode structure (3), which is arranged at least partly along a side of the 3-dimensional touch surface (2), and wherein the electrode structure (3) extends onto the contacting surface (5);
- arranging an anisotropic conductive film, ACF, layer (8) onto the electrode structure (3) on the contact surface (5); and
- arranging a flexible printed circuit, FPC, (9) onto the ACF layer.

14. Control panel for an electronic system comprising at least one user control (1) according to one of claims 1 to 12.

15. Vehicle comprising at least one control panel according to claim 14.

## Patentansprüche

1. Benutzersteuerung (1) für ein elektrisches System, umfassend:
- eine 3-dimensionale Berührungsoberfläche (2), die durch einen Benutzer zu berühren ist, um eine Benutzereingabe bereitzustellen;
- eine Elektrodenstruktur (3), die zumindest teilweise auf der 3-dimensionalen Berührungsoberfläche (2) angeordnet ist, wobei die Elektrodenstruktur (3) konfiguriert ist, um dem Benutzer eine haptische Rückkopplung bereitzustellen;
- eine Kontaktierungsoberfläche (5) für die Elektrodenstruktur (3), die zumindest teilweise entlang einer Seite der 3-dimensionalen Berührungsoberfläche (2) angeordnet ist, wobei sich die Elektrodenstruktur (3) auf die Kontaktierungsoberfläche (5) erstreckt;
- eine anisotrop leitfähige Folie, ACF, Schicht (8), die auf der Elektrodenstruktur (3) auf der Kontaktierungsoberfläche (5) angeordnet ist; und
- eine flexible gedruckte Schaltung (9), FPC, die auf der ACF-Schicht (8) angeordnet ist.

2. Benutzersteuerung (1) nach Anspruch 1, wobei die haptische Rückkopplung durch elektrostatische Kräfte zwischen dem Benutzer und der Elektrodenstruktur (3) bewirkt wird.

3. Benutzersteuerung (1) nach einem der vorhergehenden Ansprüche, wobei eine zusätzliche Sensorstruktur an der Steuerung (1) angeordnet ist, um die Benutzereingabe zu erfassen, und wobei die haptische Rückkopplung zumindest teilweise auf der erfassten Benutzereingabe basiert.

4. Benutzersteuerung nach Anspruch 3, wobei die zusätzliche Sensorstruktur zumindest teilweise auf der 3-dimensionalen Berührungsoberfläche (2) angeordnet ist.

5. Benutzersteuerung (1) nach einem der vorhergehenden Ansprüche, wobei die Kontaktierungsoberfläche (5) in einem Winkel größer als 45° angeordnet ist.

6. Benutzersteuerung (1) nach Anspruch 5, wobei sich die Kontaktierungsoberfläche (5) entlang mindestens 75 % einer Außenkante der 3-dimensionalen Berührungsoberfläche (2) erstreckt.

7. Benutzersteuerung (1) nach Anspruch 5 oder 6, wobei die Kontaktierungsoberfläche (5) im Wesentlichen in einer Ebene liegt.

8. Benutzersteuerung (1) nach einem der vorhergehenden Ansprüche, wobei die Benutzersteuerung (1) ein Kontext-Drehknopf mit einer Seitenoberfläche höher als 1 mm ist, wobei eine obere Oberfläche (6) des Kontext-Drehknopfs eine Anzeige (7) umfasst.

9. Benutzersteuerung (1) nach Anspruch 8, wobei die 3-dimensionale Berührungsoberfläche (2) eine zylindrische Oberfläche ist und die Kontaktierungsoberfläche (5) eine geschlossene ringförmige ebene Oberfläche um die 3-dimensionale Berührungsoberfläche (2) herum ist und im Wesentlichen senkrecht zu der 3-dimensionalen Berührungsoberfläche (2) ist.

10. Benutzersteuerung (1) nach einem der Ansprüche 5 bis 9, wobei die Elektrodenstruktur (3) durch die anisotrop leitfähige Folie, ACF, Schicht (8) und die flexible gedruckte Schaltung (9), FPC, elektrisch kontaktiert wird.

11. Benutzersteuerung (1) nach einem der vorhergehenden Ansprüche, wobei die flexible gedruckte Schaltung (9) ferner eine Chip-auf-Folie (10) umfasst, die elektrisch zwischen zumindest einem Teil von Kontakten zu der Elektrodenstruktur (3) und einem Ausgangsende (4) der flexiblen gedruckten Schaltung (9) angeordnet ist.

12. Benutzersteuerung (1) nach einem der vorhergehenden Ansprüche, wobei die 3-dimensionale Berührungsoberfläche (2) in Bezug auf den Benutzer unbeweglich ist und durch den Benutzer nicht betätigt werden kann.

13. Verfahren zum elektrischen Kontaktieren einer Benutzersteuerung (1) mit haptischer Rückkopplung, umfassend:
- Bereitstellen einer Benutzersteuerung, die eine 3-dimensionale Berührungsoberfläche (2) umfasst, die durch einen Benutzer zu berühren ist, um eine Benutzereingabe bereitzustellen, wobei eine Elektrodenstruktur (3) zumindest teilweise auf der 3-dimensionalen Berührungsoberfläche (2) angeordnet ist, wobei die Elektrodenstruktur (3) konfiguriert ist, um dem Benutzer eine haptische Rückkopplung bereitzustellen, wobei die Steuerung (1) ferner eine Kontaktierungsoberfläche (5) für die Elektrodenstruktur (3) umfasst, die zumindest teilweise entlang einer Seite der 3-dimensionalen Berührungsoberfläche (2) angeordnet ist, und wobei sich die Elektrodenstruktur (3) auf die Kontaktierungsoberfläche (5) erstreckt;
- Anordnen einer anisotrop leitfähigen Folie, ACF, Schicht (8) auf der Elektrodenstruktur (3) auf der Kontaktierungsoberfläche (5); und
- Anordnen einer flexiblen gedruckten Schaltung, FPC, (9) auf der ACF-Schicht.

14. Bedienfeld für ein elektronisches System, das mindestens eine Benutzersteuerung (1) nach einem der Ansprüche 1 bis 12 umfasst.

15. Fahrzeug, das mindestens ein Bedienfeld nach Anspruch 14 umfasst.

## Revendications

1. Dispositif de contrôle (1) utilisateur pour un système électrique, comprenant :
- une surface tactile tridimensionnelle (2) qui doit être touchée par un utilisateur pour fournir une entrée utilisateur ;
- une structure d'électrode (3) agencée au moins partiellement sur la surface tactile tridimensionnelle (2), dans lequel la structure d'électrode (3) est configurée pour fournir un retour haptique à l'utilisateur ;
- une surface de contact (5) pour la structure d'électrode (3), qui est agencée au moins partiellement le long d'un côté de la surface tactile tridimensionnelle (2), dans lequel la structure d'électrode (3) s'étend sur la surface de contact (5) ;
- une couche de film conducteur anisotrope, ACF, (8) agencée sur la structure d'électrode (3) sur la surface de contact (5) ; et
- un circuit imprimé flexible (9), FPC, agencé sur la couche ACF (8).

2. Dispositif de contrôle (1) utilisateur selon la revendication 1, dans lequel le retour haptique est effectué par des forces électrostatiques entre l'utilisateur et la structure d'électrode (3).

3. Dispositif de contrôle (1) utilisateur selon l'une des revendications précédentes, dans lequel une structure de capteur supplémentaire est agencée au niveau du dispositif de contrôle (1) pour détecter l'entrée utilisateur, et dans lequel le retour haptique est basé au moins partiellement sur l'entrée utilisateur détectée.

4. Dispositif de contrôle utilisateur selon la revendication 3, dans lequel la structure de capteur supplémentaire est agencée au moins partiellement sur la surface tactile tridimensionnelle (2).

5. Dispositif de contrôle (1) utilisateur selon l'une des revendications précédentes, dans lequel la surface de contact (5) est agencée selon un angle supérieur à 45°.

6. Dispositif de contrôle (1) utilisateur selon la revendication 5, dans lequel la surface de contact (5) s'étend le long d'au moins 75 % d'un bord extérieur de la surface tactile tridimensionnelle (2).

7. Dispositif de contrôle (1) utilisateur selon la revendication 5 ou 6, dans lequel la surface de contact (5) se trouve sensiblement dans un plan.

8. Dispositif de contrôle (1) utilisateur selon l'une des revendications précédentes, dans lequel le dispositif de contrôle (1) utilisateur est un bouton contextuel avec une surface latérale plus haute que 1 mm, dans lequel une surface supérieure (6) du bouton contextuel comprend un affichage (7).

9. Dispositif de contrôle (1) utilisateur selon la revendication 8, dans lequel la surface tactile tridimensionnelle (2) est une surface cylindrique, et la surface de contact (5) est une surface plane en forme d'anneau fermé autour de la surface tactile tridimensionnelle (2) et est sensiblement perpendiculaire à la surface tactile tridimensionnelle (2).

10. Dispositif de contrôle (1) utilisateur selon l'une des revendications 5 à 9, dans lequel la structure d'électrode (3) est électriquement mise en contact par la couche de film conducteur anisotrope, ACF, (8) et le circuit imprimé flexible (9), FPC.

11. Dispositif de contrôle (1) utilisateur selon l'une des revendications précédentes, dans lequel le circuit imprimé flexible (9) comprend en outre une puce sur feuille (10) électriquement agencée entre au moins une partie des contacts de la structure d'électrode (3) et une extrémité de sortie (4) du circuit imprimé flexible (9).

12. Dispositif de contrôle (1) utilisateur selon l'une des revendications précédentes, dans lequel la surface tactile tridimensionnelle (2) est non mobile par rapport à l'utilisateur et ne peut pas être actionnée par l'utilisateur.

13. Procédé de mise en contact électrique d'un dispositif de contrôle (1) utilisateur avec retour haptique, comprenant :
- la fourniture d'un dispositif de contrôle utilisateur comprenant une surface tactile tridimensionnelle (2) qui doit être touchée par un utilisateur pour fournir une entrée utilisateur, dans lequel une structure d'électrode (3) est agencée au moins partiellement sur la surface tactile tridimensionnelle (2), dans lequel la structure d'électrode (3) est configurée pour fournir un retour haptique à l'utilisateur, dans lequel le dispositif de contrôle (1) comprend en outre une surface de contact (5) pour la structure d'électrode (3), qui est agencée au moins partiellement le long d'un côté de la surface tactile tridimensionnelle (2), et dans lequel la structure d'électrode (3) s'étend sur la surface de contact (5) ;
- l'agencement d'une couche de film conducteur anisotrope, ACF, (8) sur la structure d'électrode (3) sur la surface de contact (5) ; et
- l'agencement d'un circuit imprimé flexible, FPC, (9) sur la couche ACF.

14. Panneau de dispositif de contrôle pour un système électronique comprenant au moins un dispositif de contrôle (1) utilisateur selon l'une des revendications 1 à 12.

15. Véhicule comprenant au moins un panneau de dispositif de contrôle selon la revendication 14.
